# EUROPEAN PATENT SPECIFICATION

(11) **EP 0 415 714 B1**
(45) Date of publication and mention of the grant of the patent: **05.01.1994**
(21) Application number: 90309401.9
(22) Date of filing: 28.08.1990
(51) Int. Cl.: A21C 3/04, A21C 5/00

(54) **A method and apparatus for quantitatively dividing bread dough**
Verfahren und Vorrichtung zur mengenmässigen Verteilung von Brotteig
Appareil et procédé pour quantitativement diviser la pâte

(30) Priority: 28.08.1989 JP 220992/89
(43) Date of publication of application: 06.03.1991
(73) Proprietor: RHEON AUTOMATIC MACHINERY CO. LTD., Utsunomiya-shi Tochigi-ken (JP)
(72) Inventor: Hayashi, Torahiko, Utsunomiya-shi, Tochigi-ken (JP)
(74) Representative: Leale, Robin George

(56) References cited:
- EP-A- 0 124 487
- FR-A- 2 331 286
- GB-A- 104 720
- GB-A- 1 115 859
- GB-A- 1 209 362
- GB-A- 1 228 049
- US-A- 2 642 013
- US-A- 4 492 550

## Description

This invention relates to a method and an apparatus for quantitatively dividing bread or like dough that has been kneaded by a mixer.

In producing bread, a large mass of bread dough, which is obtained by kneading by a mixer, is quantitatively divided by a divider into small pieces. Each of the small pieces is then conveyed toward a shaping station. In the prior art manner of dividing the mass of dough by a divider, the dough is sucked into a cylinder by a piston so that the volume of the dough may be metered before it is cut. As a result, the gel structure of the dough, which contains gluten in gel form, is destroyed by the mechanical force applied to the dough by the piston of the divider. A hopper associated with the divider of the prior art is not constructed to help maintain the uniform fluidity that the bread dough requires when it is thoroughly and uniformly kneaded.

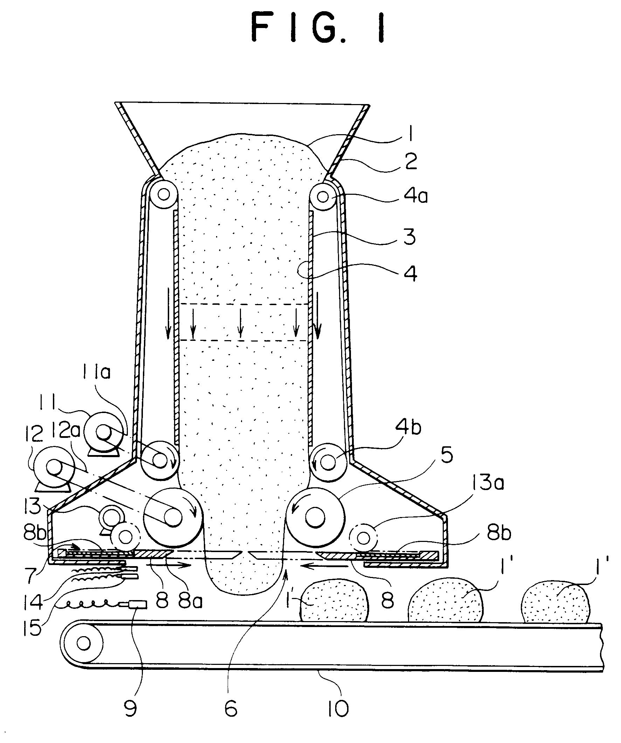

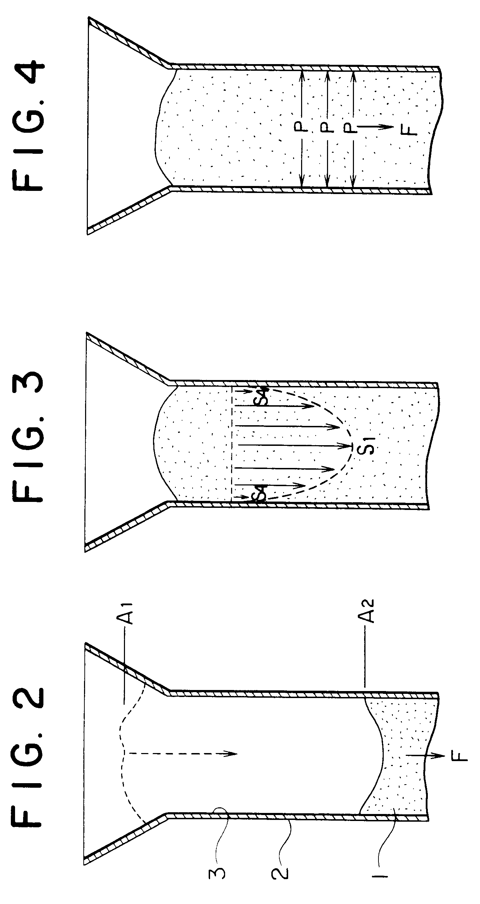

Certain factors which militate against a uniform flow of bread dough in apparatus of the prior art will now be discussed by reference to a simplified model of a known hopper having vertical side walls as shown in Figs. 2,3, and 4.

In Fig.2, A1 and A2 indicate different levels of the head of the bread dough 1 in a hopper 2. The dough 1 is supplied downwards from an outlet that is located at the bottom of the hopper 2, when it is filled up to the level A1. The flow through the outlet is faster when the hopper is filled to level A1 than when it is filled to level A2, since the weight of the dough is greater at level A1 than at level A2. Thus the different levels lead to the speed of flow of the bread dough not being uniform, but rather changing as the level moves downwards.

Fig.3 shows that the speed of flow of that part of the bread dough flowing downwards along the lines S4, i.e. in the vicinity of the inner wall surface of the hopper, is lower than the speed of flow of that part of the dough flowing downwards along the central line, S1. This difference between the flow speeds of the dough is caused by internal friction, which changes over times, and this again leads to the speed of the bread dough flowing downwards not being uniform.

Lastly, Fig. 4 shows that a force P, produced by expansion of the volume of the stocked bread dough due to progressive fermentation, obstructs the smooth downward flow of the dough.

GB-A-104720 discloses an arrangement for stretching dough into a long narrow sheet by passing the dough between at least one pair of endless belts which are arranged parallel to one another.

Viewed from one aspect the present invention provides a method of quantitatively dividing bread or like dough, comprising the steps of:
(a) supplying the dough into a dough hopper;
(b) causing the dough to flow downwards from a dough outlet located at the bottom of the hopper; and
(c) dividing the dough that flows from the dough outlet by means of a dividing device located adjacent the dough outlet, whereby the dough is quantitatively cut and divided,
   characterised in that the dough hopper has vertical conveyors along vertical side walls of the hopper and by the step of controlling the speed of the vertical conveyors in response to the flow rate of the dough flowing downwards from the dough outlet such that the speed is substantially uniform for substantially all parts of the dough between the conveyors.

In a preferred form of the invention the speed of the vertical conveyors is controlled by detecting by a photoelectric sensor the condition of the flow of the dough that flows downwards from the dough outlet.

Preferably the divided dough is received and conveyed by a conveyor located beneath the dividing device after the dough is cut and divided by the dividing device.

Viewed from another aspect the invention provides an apparatus for quantitatively dividing bread or like dough, comprising:
(a) a dough hopper having vertical side walls;
(b) a dough outlet at the bottom of the hopper; and
(c) a dough dividing device located adjacent the said dough outlet,

characterised by:
a pair of vertical conveyors located opposite each other and extending along the said side walls of the hopper; and
means for controlling the speed of the said conveyors in response to the flow rate of the dough flowing downwards from the dough outlet such that the speed of the dough is substantially uniform for substantially all parts of the dough between the conveyors.

Preferably the said speed controlling means includes a photoelectric sensor located close to and beneath the dough outlet to detect the flow rate of the dough flowing downwards from the dough outlet.

Preferably a pair of rollers are located opposite each other and adjacent the downstream ends of the said vertical conveyors. Preferably the said rollers are spaced apart from each other at a distance less than the distance between the vertical conveyors.

Preferably a detecting device is provided beneath the dough outlet to detect the downstream end of the downwardly flowing dough and to send a dough cutting signal to the dividing device, thereby causing it to cut the dough.

An embodiment of the invention will now be described by way of example and with reference to the accompanying drawings, in which:-
Fig. 1 is a vertical cross-sectional view of an apparatus according to the invention, for quantitatively dividing bread dough; and
Figs. 2, 3, and 4 are schematic cross-sectional views to illustrate the different factors which tend to obstruct a uniform flow of bread dough in an apparatus of the prior art.

Fig. 1 shows an apparatus according to the invention, for quantitatively dividing bread dough. It includes a hopper 2 having vertical side walls 3, to hold bread dough 1. The internal space surrounded by the inner belts of two conveyors 4, to be described below, has the same horizontal cross-sectional area at any position along the vertical walls.

A pair of vertical conveyors 4 extend between pairs of rollers 4a and 4b along two confronting side walls 3 of the hopper 2. The vertical conveyors 4 are arranged to move along the side walls 3 in the downstream direction. The rollers of the conveyors 4 are linked to each other by a belt (not shown) so as to rotate at the same speed. A drive belt 11a extends between a motor 11 and one of the rollers 4b so that both of the conveyors 4 are driven by the motor 11. A pair of rollers 5 are located opposite each other and close to the downstream ends of the conveyors 4. The rollers 5 are spaced apart from each other at a distance less than the distance between the conveyors 4, and are linked to each other by a belt (not shown) so as to rotate at the same speed. A drive belt 12a extends between a motor 12 and one of the rollers 5, so that the rollers 5 are driven by the motor 12.

A dough outlet 6 is formed in the bottom wall of the hopper 2, between the lower sides of the rollers 5, which thus define the dough outlet between themselves. A dividing device 7 is located close to the lower sides of the rollers 5. The dividing device includes a pair of cutters 8 arranged to slide horizontally along the bottom wall of the hopper 2, towards and away from each other. The cutter 8 have rack portions 8b engaging with pinion gears 13a which are driven in opposite directions by a motor 13. When rotation of the pinion gears 13a causes the cutters 8 to move towards each other, cutting edges 8a of the cutters come together at the center of the dough outlet 6, thereby cutting the dough 1 which is flowing downwards through the dough outlet.

Photoelectric tubes 14 and 15, comprising photoelectric sensors, are located close to and beneath the dough outlet 6 with the tube 15 positioned below and spaced from the tube 14. The function is to sense the flow rate of the dough that is flowing downwards. The flow rate is obtained by computation based on the spacing between the tubes and the time which the downstream end of the dough 1 takes to travel between the two tubes. The speed of the conveyors is then controlled in dependence on the flow rate of the dough, in that if the flow rate is detected to be higher than a control value the speed of the conveyors 4 is reduced, and vice versa.

A detecting device 9 is provided beneath the dough outlet 6, comprising a photoelectric sensor. The device 9 detects the downstream end of the downwardly flowing dough and sends dough-cutting signals to the dividing device 7, which upon receipt of such signals cuts the dough 1 into small pieces 1′. A receiving conveyor 10 receives the pieces 1′ and conveys them towards a shaping station (not shown).

In operation, when the dividing device 7 has been actuated by the motor 13 to close the opening of the dough outlet 6, it is kept at that position until the dough 1 has again filled the vertical internal space defined by the conveyors belts 4 and the side walls 3 of the hopper 2. During this filling time the conveyors 4 are stationary. When the dividing device 7 is then operated by the motor 13 to slide the cutters 8 outwardly, so that the dough outlet 6 is opened, the dough 1 again starts to flow downwardly through the outlet. At the same time, the vertical conveyors 4 start to be driven again by the motor 11, at a speed of (say) X m/min. The dough 1 is thus urged to flow downwards at the same speed as the conveyors 4. The speed of all parts of the dough 1 is uniform. That is, the speed of the dough flowing downwards along the line of flow S4 of Fig. 3, i.e. in the vicinity of the wall surface of the hopper 2, is the same as the speed of the dough in the center of the hopper. The rollers 5 are provided so as to maintain the uniform speed of the dough 1, in that even if the smooth flow of the dough is disturbed by factors that cannot be eliminated by the action of the conveyors 4, the rollers 5 can compensate for any such disturbance and thus the control of the speed of the conveyors 4 can be simplified. The rollers 5 are preferably rotated at a speed higher than that of the conveyors 4, since the spacing between the rollers is smaller than the spacing between the conveyors.

The dividing device 7 operates in response to the cutting signal from the detecting device 9, which sends that signal when it detects the downstream end of the downwardly flowing dough, so that the dough can be continuously and quantitatively divided. By suitably controlling the speed of the conveyors 4, the dough flowing speed, and hence the rate of bread production, can be changed as desired.

The dividing device 7 can alternatively be operated by, for example, a dough-cutting timing signal from a computer, which calculates the dough flowing speed on the basis of the signals from the tubes 14 and 15, and decides on the dough-cutting timing.

The dough-cutting speed of the dividing device 7 can also be changed, since the dough flowing speed can be supplementarily controlled by the rollers 5.

An experiment was conducted in which the bread dough 1 had a water content of 50%, the speed of the vertical conveyors 4 was Xm/min, and the cross-sectional area of the hopper 2 was 0.15m². The results of the experiment showed that, when the speed X was changed in the range of 1 to 5m/min, the quantity of dough flowing downwards per minute was stable at each speed, and furthermore the dough flows were proportional, more or less, to the speed of the vertical conveyors 4.

It will thus be seen that the present invention, at least in its preferred forms, provides a method and apparatus for causing a uniform downward flow of bread or like dough; and furthermore provides a method and apparatus for quantitatively dividing bread or like dough by merely cutting it at a position beneath a dough outlet, which is formed in the bottom wall of a hopper, without substantially damaging the gel structure of the dough; and furthermore provides a method and apparatus for eliminating or substantially reducing those factors that militate against a uniform flow of dough.

## Claims

1. A method of quantitatively dividing bread or like dough, comprising the steps of:
(a) supplying the dough into a dough hopper (2);
(b) causing the dough to flow downwards from a dough outlet (6) located at the bottom of the hopper; and
(c) dividing the dough that flows from the dough outlet by means of a dividing device (7) located adjacent the dough outlet, whereby the dough is quantitatively cut and divided,
characterised in that the dough hopper has vertical conveyors (4) along vertical side walls (3) of the hopper and by the step of controlling the speed of the vertical conveyors in response to the flow rate of the dough flowing downwards from the dough outlet such that the speed is substantially uniform for substantially all parts of the dough between the conveyors.

2. A method as claimed in claim 1, wherein the speed of the vertical conveyors is controlled by detecting by a photoelectric sensor (14,15) the condition of the flow of the dough that flows downwards from the dough outlet.

3. A method as claimed in claim 1 or 2, wherein the divided dough is received and conveyed by a conveyor (10) located beneath the dividing device after the dough is cut and divided by the dividing device.

4. An apparatus for quantitatively dividing bread or like dough, comprising:
(a) a dough hopper (2) having vertical side walls (3);
(b) a dough outlet (6) at the bottom of the hopper; and
(c) a dough dividing device (7) located adjacent the said dough outlet,
characterised by:
a pair of vertical conveyors (4) located opposite each other and extending along the said side walls of the hopper; and
means (11,14,15) for controlling the speed of the said conveyors in response to the flow rate of the dough flowing downwards from the dough outlet such that the speed of the dough is substantially uniform for substantially all parts of the dough between the conveyors.

5. Apparatus as claimed in claim 4, wherein the said speed controlling means includes a photoelectric sensor (14,15) located beneath and close to the dough outlet to detect the flow rate of the dough flowing downwards from the dough outlet.

6. Apparatus as claimed in claim 4 or 5, wherein a pair of rollers (5) are located opposite from each other and adjacent the downstream ends of the said vertical conveyors.

7. Apparatus as claimed in claim 6, wherein the said rollers are spaced apart from each other at a distance smaller than the distance between the said vertical conveyors.

8. Apparatus as claimed in any of claims 4 to 7, wherein a detecting device (9) is provided beneath the dough outlet to detect the downstream end of the downwardly flowing dough and to send a dough-cutting signal to the dividing device, thereby causing the dividing device to cut the dough.

## Patentansprüche

1. Verfahren zum mengenmäßigen Unterteilen von Brotteig oder ähnlichem Teig, umfassend die Schritte des:
(a) Zuführens des Teigs in einen Teigtrichter (2);
(b) Veranlassens des Teigs, abwärts aus einem Teigauslaß (6) auszufließen, der am Boden des Trichters angeordnet ist; und
(c) Unterteilens des Teigs, der aus dem Teigauslaß ausfließt, mittels einer Teilungseinrichtung (7), die nahe dem Teigauslaß angeordnet ist, wodurch der Teig mengenmäßig abgeschnitten und unterteilt wird,
**dadurch gekennzeichnet,**
daß der Teigtrichter vertikale Förderer (4) entlang vertikaler Seitenwände (3) des Trichters hat, und gekennzeichnet durch den Schritt des Steuerns der Geschwindigkeit der vertikalen Förderer beim Ansprechen auf die Fließrate des Teigs, der aus dem Teigauslaß abwärts ausfließt, derart, daß die Geschwindigkeit für im wesentlichen alle Teile des Teigs zwischen den Förderern im wesentlichen gleichmäßig ist.

2. Verfahren nach Anspruch 1, wobei die Geschwindigkeit der vertikalen Förderer gesteuert wird durch Feststellen des Fließzustandes des Teigs, der abwärts aus dem Teigauslaß ausfließt, mittels eines photoelektrischen Sensors (14, 15).

3. Verfahren nach Anspruch 1 oder 2, wobei der unterteilte Teig nach dem Schneiden und Unterteilen des Teigs mittels der Teilungseinrichtung von einem Förderer (10) aufgenommen und gefördert wird, der unter der Teilungseinrichtung angeordnet ist.

4. Vorrichtung zum mengenmäßigen Unterteilen von Brotteig oder ähnlichem Teig, umfassend:
(a) einen Teigtrichter (2), der vertikale Seitenwände (3) hat;
(b) einen Teigauslaß (6) an dem Boden des Trichters; und
(c) eine Teigteilungseinrichtung (7), die nahe dem Teigauslaß angeordnet ist,
gekennzeichnet durch:
ein Paar von vertikalen Förderern (4), die einander gegenüberliegend angeordnet sind und sich entlang der Seitenwände des Trichters erstrecken; und
eine Einrichtung (11, 14, 15) zum Steuern der Geschwindigkeit der Förderer beim Ansprechen auf die Fließrate des Teigs, der abwärts aus dem Teigauslaß ausfließt derart, daß die Geschwindigkeit des Teigs für im wesentlichen alle Teile des Teigs zwischen den Förderern im wesentlichen gleichmäßig ist.

5. Vorrichtung nach Anspruch 4, wobei die Geschwindigkeitssteuereinrichtung einen photoelektrischen Sensor (14, 15) umfaßt, der unter und nahe dem Teigauslaß angeordnet ist, um die Fließrate des abwärts aus dem Teigauslaß ausflißenden Teigs festzustellen.

6. Vorrichtung nach Anspruch 4 oder 5, wobei ein Paar von Rollen (5) einander gegenüberliegend und nahe dem stromabwärtigen Ende der vertikalen Förderer angeordnet ist.

7. Vorrichtung nach Anspruch 6, wobei die Rollen in einem Abstand voneinander liegen, der kleiner ist als der Abstand zwischen den vertikalen Förderern.

8. Vorrichtung nach irgendeinem der Ansprüche 4 bis 7, wobei eine Feststelleinrichtung (9) unter dem Teigauslaß vorgesehen ist, um das stromabwärtige Ende des abwärts fließenden Teigs festzustellen und ein Teigabschneidesignal an die Teilungseinrichtung zu senden, um dadurch die Teilungseinrichtung zu veranlassen, den Teig abzuschneiden.

## Revendications

1. Procédé de subdivision quantitative de pâte de pain ou de pâte analogue, comprenant les étapes consistant :
(a) à envoyer la pâte dans une trémie à pâte (2),
(b) à faire descendre la pâte d'une sortie de pâte (6) placée au fond de la trémie, et
(c) à subdiviser la pâte qui s'écoule à la sortie de pâte au moyen d'un dispositif de subdivision (7) placé au voisinage de la sortie de pâte, de manière que la pâte soit coupée et subdivisée quantitativement,
caractérisé en ce que la trémie à pâte comporte des transporteurs verticaux (4) le long des parois latérales verticales (3) de la trémie et par l'étape de commande de la vitesse des transporteurs verticaux en réponse au débit de la pâte descendant de la sortie de pâte de façon que la vitesse soit sensiblement régulière pour sensiblement toutes les parties de la pâte comprises entre les transporteurs.

2. Procédé selon la revendication 1, suivant lequel la vitesse des transporteurs verticaux est commandée par détection par un détecteur photo-électrique (14, 15) de la condition d'écoulement de la pâte qui descend de la sortie de pâte.

3. Procédé selon la revendication 1 ou 2, suivant lequel la pâte divisée est réceptionnée et convoyée par un transporteur (10) placé sous le dispositif de subdivision après que la pâte a été coupée et subdivisée par le dispositif de subdivision.

4. Appareil de subdivision quantitative de pâte à pain ou de pâte analogue, comprenant :
(a) une trémie à pâte (2) comportant des parois latérales verticales (3),
(b) une sortie de pâte (6) au fond de la trémie, et
(c) un dispositif (7) de subdivision de pâte placé au voisinage de ladite sortie de pâte,
caractérisé par :
deux transporteurs verticaux (4) placés en face l'un de l'autre et disposés le long desdites parois latérales de la trémie et
des moyens (11, 14, 15) de commande de la vitesse desdits transporteurs en réponse au débit de la pâte descendant de la sortie de pâte, de façon que la vitesse de la pâte soit sensiblement régulière pour sensiblement toutes les parties de la pâte comprises entre les transporteurs.

5. Appareil selon la revendication 4, dans lequel lesdits moyens de commande de la vitesse comprennent un détecteur photo-électrique (14, 15) placé sous et à proximité de la sortie de pâte pour détecter le débit de la pâte descendant de ladite sortie de pâte.

6. Appareil selon la revendication 4 ou 5, dans lequel deux rouleaux (5) sont placés en face l'un de l'autre et au voisinage de l'extrémité aval desdits transporteurs verticaux.

7. Appareil selon la revendication 6, dans lequel lesdits rouleaux sont placés à une distance l'un de l'autre qui est inférieure à la distance comprise entre lesdits transporteurs verticaux.

8. Appareil selon l'une quelconque des revendications 4 à 7, dans lequel un dispositif de détection (9) est placé sous la sortie de la pâte pour détecter l'extrémité aval de la pâte en cours de descente et pour envoyer un signal de sectionnement de la pâte au dispositif de subdivision, de façon à faire couper la pâte par le dispositif de subdivision.
